# EUROPÄISCHE PATENTSCHRIFT

(11) **EP 2 047 942 B1**
(45) Veröffentlichungstag und Bekanntmachung des Hinweises auf die Patenterteilung: **05.09.2012**
(21) Anmeldenummer: 08017082.2
(22) Anmeldetag: 29.09.2008
(51) Int. Cl.: B23K 35/02, B23K 35/30, B23K 1/00

(54) **Mehrschichtlot für das Hartlöten von Edelstählen und Nickel- oder Kobalt-Legierungen**
Multilayer solder for brazing stainless steel and nickel or cobalt alloys
Lot multicouche pour le brasage d'aciers inoxydables et d'alliages de nickel ou de cobalt

(30) Priorität: 08.10.2007 DE 102007048299
(43) Veröffentlichungstag der Anmeldung: 15.04.2009
(73) Patentinhaber: Behr GmbH & Co. KG, 70469 Stuttgart (DE)
(72) Erfinder: Angermann, Hans-Heinrich, 70599 Stuttgart (DE)
(74) Vertreter: Grauel, Andreas

(56) Entgegenhaltungen:
- EP-A- 1 199 129
- EP-A- 1 759 806
- WO-A-01/83182

## Beschreibung

Die Erfindung betrifft ein Mehrschichtlot mit einer Vielzahl von Schichten, die aus unterschiedlichen Materialien gebildet sind. Die Erfindung betrifft des Weiteren ein Verfahren zum Herstellen eines Bauteils, insbesondere eines Bauteils einer Hochtemperatur-Brennstoffzelle. Darüber hinaus betrifft die Erfindung einen Schichtwärmeübertrager mit einem vorab beschriebenen Mehrschichtlot

Bauteile, die hohen thermischen, korrosiven und/oder mechanischen Belastungen ausgesetzt sind, werden bevorzugt aus hochfegierten Edelstählen, Ni-Basis Legierungen oder Kobalt-Legierungen, gefertigt. Ein Beispiel sind Wärmeübertrager in der Peripherie der Brennstoffzelle, die bei einem Temperaturgradienten von bis zu 900 Kelvin über das Bauteil thermozyklischer Belastung und aggressiven Gasen ausgesetzt sind.

Häufig werden derartige Bauteile mit Ni-, Fe- oder Co-Basis Loten in Form von Pasten aus amorphen Partikeln oder in Form amorpher Lotfolien gelötet. Die Partikel der Pasten weisen typischerweise eine mittlere Größe von circa 40 µm auf, die Lotfolien einer Dicke von mindestens 20 µm. Die Ni-, Fe- oder Co-Basis Lote enthalten neben den jeweiligen Basiselementen Ni, Fe und Co oft noch Cr zur Gewährung von Korrosionsbeständigkeit und insbesondere Elemente wie B, Si und P. Letztere Elemente werden hinzugesetzt, um den Schmelzpunkt der jeweiligen Lotlegierung soweit unter den Schmelzpunkt der Grundwerkstoffe abzusenken, dass diese durch den Lötprozess nicht in ihren Eigenschaften beeinträchtigt werden, zum Beispiel durch Komvergrößerung oder gar durch, insbesondere massives, Aufschmelzen des Grundwerkstoffes selbst.

Die schmelzpunkterniedrigenden Elemente haben die unangenehme Tendenz, in der Lötnahtmitte (Si, P) oder an Komgrenzen der Lötnaht Ausscheidungen zu bilden (Si), die sowohl die mechanische Festigkeit als auch die Korrosionsbeständigkeit der Lötnaht entscheidend schwächen können, oder wie B in den Grundwerkstoff abzudiffundieren, wo durch die Bildung von Cr-Boriden an Komgrenzen der Korrosionswiderstand des Grundwerkstoffes an der Grenzschicht zu den Ausscheidungen reduziert wird.

Es ist bekannt, dass die Ausscheidung von spröden Siliziden in der Lötnahtmitte dann unterdrückt werden kann, wenn die Lötnahtbreite eine bestimmte Breite, nämlich die so genannte kritische Lötspaltbreite, nicht überschreitet (siehe z. B. T. Cosack: "Hochtemperaturlöten mit borfreien niedrigphosphorlegierten Nickelbasisloten Verarbeitung, Eigenschaften und Anwendung", Technisch-wissenschaftliche Berichte der RWTH Aachen, Nr. 11.7.3.86 - 1986). Die kritische Lotspaltbreite liegt bei wenigen zehn Mikrometem. Dies wird genutzt in den technischen Lehren DE 10 2006 005 570.5 und DE 10 2007 008 341.8 der Anmelderin. Bei einem speziell konstruierten und aufgebauten Wärmeübertrager wird das Lot, typischerweise Ni105, bestehend aus 19 % Cr, 10,2 % Si, Rest Ni, stirnseitig auf die zu fügenden Nähte aufgebracht. Die Nähte weisen eine Breite kleiner als die kritische Lötspaltbreite auf. Beim Löten wird das Lot über die Kapillarkraft in den Lötspalt gezogen. Die Lötnahtmitte bleibt so im Wesentlichen ausscheidungsfrei. Nachteilig ist, dass an manchen Stellen, zum Beispiel stirnseitig der Lötnaht, konstruktionsbedingt breitere Nähte vorliegen, in denen sich kleine zusammenhängende Sprödphasengebiete ausbilden. Bei starker mechanischer Belastung der Bauteile können an solchen Stellen lokal kleine Risse entstehen, die sich weiter ausbreiten und zur Undichtigkeit des Bauteils führen können.

Es ist weiterhin bekannt, dass bestimmte metastabile Phasen, zum Beispiel Silizium- und Bor-haltige Ausscheidungen, durch eine Glühbehandlung beseitigt oder zumindest reduziert werden können. Nachteilig ist hier, dass die Glühung entweder lange dauert und damit kostspielig ist, wenn sie bei relativ niedriger Temperatur und langer Haitezeit durchgeführt wird, oder durch übermäßige Komvergrößerung den Grundwerkstoff schädigt, wenn sie bei relativ hohen Temperaturen und kurzer Haitezeit ausgeführt wird.

Eine andere Möglichkeit ist es, auf die zu fügenden Bleche bereits eine dünne Lötschicht von 1 bis 25 µm aufzubringen und das Teil unter Druck zu löten. Dies ist in DE 10 2004 041 309.6 offenbart. Seit langem Stand der Technik ist die chemische Beschichtung mit entsprechend dünnen Ni-P Schichten. Es hat sich allerdings gezeigt, dass auch eine Beschichtung mit lediglich 3 µm NiP11 unter maximalem Druck noch zu Ausscheidungen von Phosphiden in der Lötnahtmitte führt, da Nickel praktisch keine Löslichkeit für P bei Raumtemperatur aufweist. Durch Glühbehandlung können die Phosphide nicht entfernt werden.

Eine Technik, die den Randbereich der vorliegenden Erfindung berührt, wird in der WO 01/83182 A1 publiziert. Andere Patente derselben Anmelderin, wie WO 2005/051815 A2, US 2006/0219759 A1 oder US 2007/0023489 A1 stellen Weiterentwicklungen der Grundidee aus der WO 01/83182 A1 dar. Als Lote, unter anderem für Edelstahl, werden Materialien mit einer Dicke von 10 µm bis 1 cm vorgeschlagen, die aus Hunderten bis Tausenden einzelner Lagen mit einer Dicke von 1 bis 1000 nm bestehen. Die dünnen Schichten bestehen alternierend aus zwei Werkstoffen. Als Materialkombinationen werden genannt: Kombinationen mit Silizium Rh/Si, Ni/Si, Zr/Si, Kombinationen mit Aluminium Ni/Al, Ti/Al, Monel/Al, Zr/Al, Kombinationen mit Bor Ti/B, Kombinationen mit Kohlenstoff Ti/C und thermitisch reagierende Werkstoffkombinationen wie Al/Fe₂O₃ oder Al/Cu₂O. Insbesondere sind die Materialpartner so gewählt, dass es zwischen den jeweiligen Nanoschichten, das heißt ein Lötofen soll nicht nötig sein. Als bevorzugte Variante kann zusätzlich noch ein- oder beidseitig niedrigschmelzendes Lot beigefügt werden, das durch die exotherme Reaktion der Multinanolagenschicht aufschmilzt und die Fügung der Lötpartner herbeiführt. Der Nachteil bei dieser Technik ist, dass die zwischen den Fügepartnem entstehende Schicht schon beim Abkühlen von Rissen durchzogen wird und/oder so spröde ist, dass sie größeren mechanischen Anforderungen, wie sie von Hochtemperaturwärme-übertragem gefordert werden, nicht gerecht werden kann.

Aufgabe der Erfindung ist es, ein Mehrschichtlot bereitzustellen, mit welchem Lötnähte erzeugbar sind, die keine oder nur in sehr geringem Ausmaß spröde Ausscheidungsphasen aufweisen und auch im Grundwerkstoff keine oder nur in sehr geringem Ausmaß unerwünschte Ausscheidungen bewirken. Darüber hinaus soll die Herstellung eines gelöteten Bauteils beziehungsweise einer gelöteten Komponente mit hoher thermischer und mechanischer Festigkeit sowie hoher Korrosionsresistenz ermöglicht werden.

Die Aufgabe ist bei einem Mehrschichtlot mit einer Vielzahl von Schichten, die aus unterschiedlichen Materialien gebildet sind, dadurch gelöst, dass die Schichten alternierend aus mindestens zwei metallischen Elementen aus der Gruppe Nickel (Ni), Eisen (Fe), Chrom (Cr), Kobalt (Co), Silber (Ag), Kupfer (Cu) und Gold (Au) gebildet sind, wobei die einzelnen Schichten jeweils eine Schichtdicke von 1 bis 100 Nanometer aufweisen.

Vorzugsweise enthalten die Schichten jeweils genau ein metallisches Element. Die Schichten können neben den genannten auch andere metallische Elemente enthalten, die in kommerziell verfügbaren Loten enthalten sind. Gemäß einem wesentlichen Aspekt der Erfindung sind Schmelzpunkt erniedrigende Stoffe, wie Silizium (Si), Phosphor (P) oder Bor (B), in dem erfindungsgemäßen Mehrschichtlot nicht enthalten. Eine mit dem erfindungsgemäßen Mehrschichtlot aufgebaute Komponente wird in konventioneller Weise in einem Lötofen bei hohen Temperaturen verlötet. Eine exotherme Reaktion findet nicht statt.

Ein bevorzugtes Ausführungsbeispiel des Mehrschichtlots ist dadurch gekennzeichnet, dass die einzelnen Schichten jeweils eine Schichtdicke von 1 bis 100 Nanometer, insbesondere 1 bis 10 Nanometer, aufweisen. Dabei wird ausgenutzt, dass Folien oder Schichten mit Schichtdicken im Nanometerbereich gegenüber nicht nanostrukturierten Körpern, das heißt makroskopischen Körpern, des gleichen Elements eine erheblich verminderte Schmelztemperatur aufweisen.

Ein weiteres bevorzugtes Ausführungsbeispiel des Mehrschichtlots ist dadurch gekennzeichnet, dass das Mehrschichtlot eine Gesamtschichtdicke von 1 bis 100 Mikrometer aufweist. Als Gesamtschichtdicke wird die Gesamtdicke des Mehrschichtlots bezeichnet, das wiederum auch als Mehriagensystem bezeichnet wird. Die einzelnen Schichten können als Folien ausgebildet sein. Vorzugsweise werden jedoch zur Herstellung des Mehrschichtlots zur Abscheidung von Schichten im Dickenbereich von Nanometern übliche Verfahren verwendet, wie Puls-Laser-Deposition, Magnetron-Sputter-Deposition oder lonenstrahl-Sputter-Deposition. Die Magnetron-Sputter-Deposition hat gegenüber den anderen Verfahren den Vorteil, dass die Durchmischung der Schichten am geringsten ist. Insbesondere ist der Schmelzpunkt so niedrig, dass die entsprechenden Bestandteile des Lotes nicht mehr erforderlich sind.

Besonders gute Ergebnisse wurden im Rahmen der vorliegenden Erfindung mit Gesamtschichtdicken von 3 bis 50 Mikrometern, insbesondere 5 bis 20 Mikrometern, erreicht.

Ein weiteres bevorzugtes Ausführungsbeispiel des Mehrschichtlots ist dadurch gekennzeichnet, dass das Mehrschichtlot mindestens 100, insbesondere 1000, Schichten umfasst. Die Anzahl der Schichten hängt mit der Dicke der einzelnen Schichten und der Gesamtschichtdicke zusammen.

Ein weiteres bevorzugtes Ausführungsbeispiel des Mehrschichtlots ist dadurch gekennzeichnet, dass das Mehrschichtlot binär aufgebaut ist. In diesem Zusammenhang bedeutet binär, dass in dem Mehrschichtlot zwei unterschiedliche metallische Elemente kombiniert beziehungsweise alternierend angeordnet sind. Die beiden metallischen Elemente sind vorzugsweise in Form von alternierenden Schichten oder Folien übereinander angeordnet. Darüber hinaus können weitere Schichten in dem binären Mehrschichtlot enthalten sein.

Ein weiteres bevorzugtes Ausführungsbeispiel des Mehrschichtlots ist dadurch gekennzeichnet, dass das Mehrschichtlot Hauptschichten aus Nickel undloder Eisen enthält. Vorzugsweise sind die Hauptschichten alternierend mit Nebenschichten angeordnet.

Ein weiteres bevorzugtes Ausführungsbeispiel des Mehrschichtlots ist dadurch gekennzeichnet, dass das Mehrschichtlot Nebenschichten aus Chrom enthält. Vorzugsweise sind die Nebenschichten aus Chrom im Wechsel mit Hauptschichten aus Nickel und/oder Eisen angeordnet. Neben den binären Multilagenschichten, also den Hauptschichten und den Nebenschichten, können zusätzlich noch Zwischenschichten aus anderen Elementen eingebracht werden, zum Beispiel zur Bildung einer Nickel-Chrom-Eisen-Schichtabfolge.

Ein weiteres bevorzugtes Ausführungsbeispiel des Mehrschichtlots ist dadurch gekennzeichnet, dass die Hauptschichten Dicken von 1 bis 20 Nanometer aufweisen. Besonders bevorzugt sind Hauptschichtdicken von 1 bis 10 Nanometer.

Ein weiteres bevorzugtes Ausführungsbeispiel des Mehrschichtlots ist dadurch gekennzeichnet, dass die Nebenschichten Dicken von 1 bis 5 Nanometer aufweisen. Bei Hauptschichtdicken von 10 Nanometer hat sich zum Beispiel eine Nebenschichtdicke von etwa 2 Nanometer als besonders vorteilhaft erwiesen. Insbesondere können eine 10 Nanometer dicke Ni-Schicht und eine 2 Mikrometer dicke Cr-Schicht abwechselnd, insbesondere alternierend, angeordnet sein. Insbesondere kann besonders bevorzugt eine Ni-Cr-Schicht erzeugt werden. Insbesondere handelt es sich dabei um eine Ni-Cr20-Schicht. Insbesondere können in einer vorteilhaften anderen Ausführung können durch Aufbringung von anderen Elementen andere Legierungen und andere Schichtdicken erzielt werden.

Ein weiteres bevorzugtes Ausführungsbeispiel des Mehrschichtlots ist dadurch gekennzeichnet, dass zwischen den einzelnen Schichten Barriereschichten vorgesehen sind. Die Barriereschichten dienen zum Beispiel dazu, eine mögliche Interdiffusion zwischen den einzelnen Schichten des Mehrschichtlots zu unterbinden.

Bei einem Verfahren zum Herstellen eines Bauteils, insbesondere eines Bauteils einer Hochtemperatur-Brennstoffzelle, ist die vorab angegebene Aufgabe dadurch gelöst, dass ein vorab beschriebenes Mehrschichtlot auf ein Halbzeug oder auf das Bauteil aufgebracht und in einem Lötofen gelötet wird. Die Beschichtung kann zunächst auf ein Halbzeug aufgebracht werden, das anschließend umgeformt wird. Die Beschichtung kann aber auch auf ein umgeformtes Halbzeug aufgebracht werden. Als Halbzeug wird vorzugsweise ein Blechmaterial verwendet.

Die Erfindung betrifft auch einen Schichtwärmeübertrager mit einem vorab beschriebenen Mehrschichtlot, der insbesondere nach dem vorab beschriebenen Verfahren hergestellt wurde. Der Aufbau und die Funktion eines Schichtwärmeübertragers sind zum Beispiel in der deutschen Offenlegungsschrift DE 103 28 274 A1 der gleichen Anmelderin offenbart.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

Die beiliegende Figur zeigt ein kartesisches Koordinatendiagramm, in dem die Schmelztemperatur über der Schichtdicke aufgetragen ist.

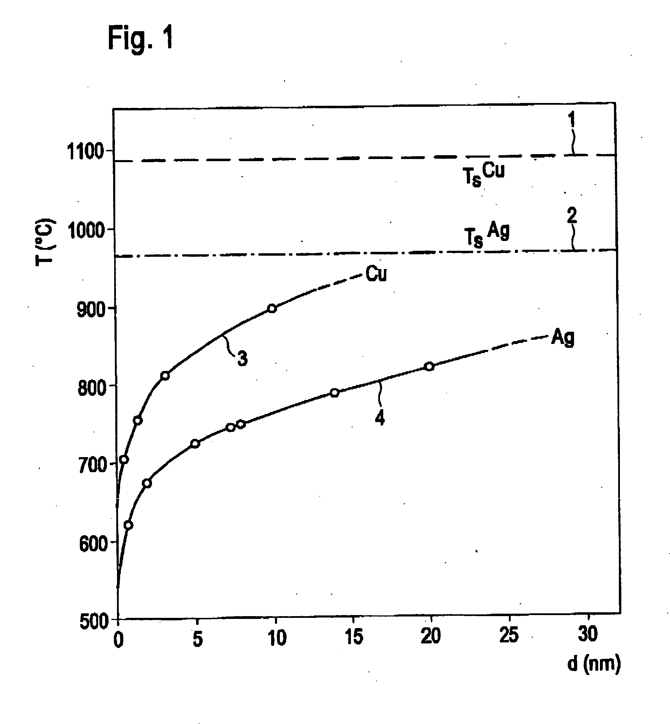

In der beiliegenden, einzigen Figur 1 ist die Schmelztemperatur T in Grad Celsius über der Schichtdicke d in Nanometer für Kupfer (Cu) und Silber (Ag) aufgetragen. Durch eine gestrichelte Linie 1, die parallel zur X-Achse verläuft, ist der Schmelzpunkt für makroskopisches Kupfer dargestellt. Darunter ist durch eine strichpunktierte Linie 2, die ebenfalls parallel zur X-Achse verläuft, der Schmelzpunkt für makroskopisches Silber dargestellt. Durch Kurven 3, 4 sind die Verläufe der Schmelzpunkte für Kupfer und Silber über Schichtdicken im Nanometerbereich dargestellt.

Das erfindungsgemäße Mehrschichtlot besteht aus einem Multilagensystem von vorzugsweise 1 bis 100 Nanometer dünnen Schichten. Das Multilagensystem besteht aus einer alternierenden Schichtabfolge von metallischen Elementen. Metallische Elemente sind vorzugsweise Nickel, Eisen, Chrom, Kobalt, Silber, Kupfer, Gold etc. Bei den Schichtdicken im Nanometerbereich wird ausgenutzt, dass derartige Schichtdicken gegenüber nicht nanostrukturierten Körpern des gleichen Elements eine erheblich verminderte Schmelztemperatur aufweisen. In Figur 1 ist dies für die Elemente Kupfer und Silber dargestellt. Dieser Geometrieeffekt auf die Schmelztemperatur von Elementen rührt daher, dass sich bei nanostrukturierten Gebilden ein erheblicher Anteil der Atome an der Oberfläche befindet und damit die Gesamtenergie zum Aufbrechen aller Bindungen der Schicht erheblich geringer ist als bei nanostrukturierten Körpern.

Für thermomechanisch und korrosiv hoch belastete Komponenten werden besonders bevorzugt Lote auf Nickel- und manchmal auch auf Eisen-Basis verwendet. Gemäß einem wesentlichen Aspekt der Erfindung werden binäre Multilagensysteme der Kombinationen Nickel/Chrom und Eisen/Chrom verwendet. Um Löttemperaturen unter 1250 Grad Celsius zu erzielen, sollten die Dicken der Nickel- und Eisenlagen zwischen 1 und 20 Nanometer, bevorzugt zwischen 1 und 10 Nanometer, liegen. Um einen Chromgehalt der Lötnaht zwischen 15 und 25 Prozent zu erreichen, muss die Dicke der Chrom-Lagen entsprechend geringer sein, das heißt bei einer Dicke einer Nickel-Lage von 10 Nanometer liegt die Dicke der Chrom-Schicht bei circa 2 Nanometern.

Die Multilagenbeschichtung beziehungsweise das erfindungsgemäße Mehrschichtlot kann auf Halbzeugmaterial aufgetragen werden, das anschließend weiter verarbeitet, zum Beispiel umgeformt, wird. Die Multilagenbeschichtung beziehungsweise das Mehrschichtlot kann aber auch auf bereits umgeformtes Blechmaterial aufgebracht werden.

Zur Beschichtung können die zur Abscheidung von Schichten im Dickenbereich von Nanometer üblichen Verfahren verwendet werden, wie Puls-Laser-Deposition, Magnetron-Sputter-Deposition oder Ionenstrahl-Sputter-Deposition. Die Magnetron-Sputter-Deposition hat gegenüber den anderen Verfahren den Vorteil, dass die Durchmischung der Schichten am geringsten ist.

Um mögliche Interdiffusion zwischen den einzelnen Schichten des Multilagensystems und insbesondere ein Abbinden der den Schmelzpunkt einer Schicht absenkenden freien Bindung an der Oberfläche einer Schicht zu unterbinden, können zwischen den einzelnen Schichten zusätzlich noch Baniereschichten aufgebracht werden.

Die mit den Lot-Multilagensystemen beschichteten Bleche werden vorzugsweise zu einem Block geschichtet, mit Druck vorgespannt und der Druck durch das Legen einer passenden Schweißnaht, zum Beispiel durch Aufschweißen von Kästen zur Medienzu- und -abführung, konserviert. Das so vorbehandelte und komplettierte Bauteil kann anschließend in einem handelsüblichen Vakuum- oder Inertgaslötofen zu einem gasdichten Bauteil verlötet werden. Eine exotherme Reaktion findet dabei im Wesentlichen nicht statt, da die angegebenen Elemente keine chemischen Verbindungen unter Bildung einer neuen Substanz eingehen, das heißt die Wärmeenergie zum Schmelzen des Multilagenlotes muss von außen zugeführt werden.

Zum Homogenisieren der Lötnähte kann nach dem Löten, insbesondere in einem Arbeitsgang direkt nach dem Löten, noch eine Glühbehandlung erfolgen, so dass Interdiffusion der ursprünglich in Lagen getrennten Elemente ineinander erfolgt und eine metallische Legierung entsteht. Da die Diffusionslängen gering sind, reicht eine Glühbehandlung von circa zwei Stunden bei 1000 Grad Celsius aus.

Die Erfindung liefert unter anderem den Vorteil, dass eine unerwünschte Versprödung der Lötnaht unterbunden wird. Darüber hinaus wird der Grundwerkstoff, auf den das erfindungsgemäße Mehrschichtlot aufgebracht wird, prinzipiell nicht geschädigt, da sich im Lot keine Elemente befinden, die bei Diffusion in den Grundwerkstoff Ausscheidungen bilden. Die vorab angegebenen Beschichtungsverfahren, das heißt die Verfahren zur Aufbringung des erfindungsgemäßen Mehrschichtlots, sind im Vergleich zur Benutzung von Lotpasten sauber. Das führt dazu, dass zur Aufbringung des Mehrschichtlots keine besonderen Schutzmaßnahmen erforderüch sind.

## Patentansprüche

1. Mehrschichtlot mit einer Vielzahl von Schichten, die aus unterschiedlichen Materialien gebildet sind, **dadurch gekennzeichnet, dass** die Schichten alternierend aus mindestens zwei metallischen Elementen aus der Gruppe Nickel (Ni), Eisen (Fe), Chrom (Cr), Kobalt (Co), Silber (Ag), Kupfer (Cu) und Gold (Au) gebildet sind und die einzelnen Schichten jeweils eine Schichtdicke von 1 bis 100 Nanometer aufweisen.

2. Mehrschichtlot nach Anspruch 1, **dadurch gekennzeichnet, dass** die einzelnen Schichten jeweils eine Schichtdicke von 1 bis 10 Nanometer aufweisen.

3. Mehrschichtlot nach einem der vorhergehenden Ansprüche, **dadurch gekennzeichnet, dass** das Mehrschichtlot eine Gesamtschichtdicke von 1 bis 100 Mikrometer aufweist.

4. Mehrschichtlot nach einem der vorhergehenden Ansprüche, **dadurch gekennzeichnet, dass** das Mehrschichtlot eine Gesamtschichtdicke von 3 bis 50 Mikrometer aufweist.

5. Mehrschichtlot nach einem der vorhergehenden Ansprüche, **dadurch gekennzeichnet, dass** das Mehrschichtlot eine Gesamtschichtdicke von 5 bis 20 Mikrometer aufweist.

6. Mehrschichtlot nach einem der vorhergehenden Ansprüche, **dadurch gekennzeichnet, dass** das Mehrschichtlot mindestens 100, insbesondere 1000, Schichten umfasst.

7. Mehrschichtlot nach einem der vorhergehenden Ansprüche, **dadurch gekennzeichnet, dass** das Mehrschichtlot binär aufgebaut ist.

8. Mehrschichtlot nach einem der vorhergehenden Ansprüche, **dadurch gekennzeichnet, dass** das Mehrschichtlot Hauptschichten aus Nickel und/oder Eisen enthält.

9. Mehrschichtlot nach Anspruch 8, **dadurch gekennzeichnet, dass** das Mehrschichtlot Nebenschichten aus Chrom enthält.

10. Mehrschichtlot nach Anspruch 8 oder 9, **dadurch gekennzeichnet, dass** die Hauptschichten Dicken von 1 bis 20 Nanometer aufweisen.

11. Mehrschichtlot nach einem der Ansprüche 8 bis 10, **dadurch gekennzeichnet, dass** die Nebenschichten Dicken von 1 bis 5 Nanometer aufweisen.

12. Mehrschichtlot nach einem der vorhergehenden Ansprüche, **dadurch gekennzeichnet, dass** zwischen den einzelnen Schichten zumindest eine Barriereschicht vorgesehen ist.

13. Verfahren zum Herstellen eines Bauteils, insbesondere eines Bauteils einer Hochtemperatur-Brennstoffzelle, **dadurch gekennzeichnet, dass** ein Mehrschichtlot nach einem der vorhergehenden Ansprüche auf ein Halbzeug oder auf das Bauteil aufgebracht und in einem Lötofen gelötet wird.

14. Schichtwärmeübertrager mit einem Mehrschichtlot nach einem der Ansprüche 1 bis 12, der insbesondere gemäß dem Verfahren nach Anspruch 13 hergestellt wurde.

## Claims

1. A multi-layer solder having a multiplicity of layers formed from different materials, **characterized in that** the layers are formed alternately from at least two metal elements from the group of nickel (Ni), iron (Fe), chromium (Cr), cobalt (Co), silver (Ag), copper (Cu) and gold (Au) and the individual layers each have a layer thickness of 1 to 100 nanometres.

2. The multi-layer solder according to claim 1, **characterised in that** the individual layers each have a layer thickness of 1 to 10 nanometres.

3. The multi-layer solder according to one of the preceding claims, **characterized in that** the multi-layer solder has an overall layer thickness of 1 to 100 micrometres.

4. The multi-layer solder according to one of the preceding claims, **characterized in that** the multi-layer solder has an overall layer thickness of 3 to 50 micrometres.

5. The multi-layer solder according to one of the preceding claims, **characterized in that** the multi-layer solder has an overall layer thickness of 5 to 20 micrometres.

6. The multi-layer solder according to one of the preceding claims, **characterized in that** the multi-layer solder comprises at least 100 layers, in particular 1000 layers.

7. The multi-layer solder according to one of the preceding claims, **characterized in that** the multi-layer solder is constructed in a binary manner.

8. The multi-layer solder according to one of the preceding claims, **characterized in that** the multi-layer solder contains primary layers made of nickel and/or iron.

9. The multi-layer solder according to claim 8, **characterized in that** the multi-layer solder contains secondary layers made of chromium.

10. The multi-layer solder according to claim 8 or 9, **characterized in that** the primary layers have thicknesses of 1 to 20 nanometres.

11. The multi-layer solder according to one of claims 8 to 10, **characterized in that** the secondary layers have thicknesses of 1 to 5 nanometres.

12. The multi-layer solder according to one of the preceding claims, **characterized in that** at least one barrier layer is provided between the individual layers.

13. A method for producing a component part, in particular a component part of a high-temperature fuel cell, **characterized in that** a multi-layer solder according to one of the preceding claims is applied to a semi-finished product or to the component part and is soldered in a soldering furnace.

14. A layered heat exchanger having a multi-layer solder according to one of claims 1 to 12, which was produced in particular in accordance with the method according to claim 13.

## Revendications

1. Brasage multicouche comportant une multiplicité de couches qui sont constituées de matériaux différents, **caractérisé en ce que** les couches sont constituées, en alternante, d'au moins deux éléments métalliques du groupe se composant de nickel (Ni), de fer (Fe), de chrome (Cr), de cobalt (Co), d'argent (Ag), de cuivre (Cu) et d'or (Au), et les différentes couches présentent à chaque fois une épaisseur de couche comprise entre 1 manomètre et 100 manomètres.

2. Brasage multicouche selon la revendication 1, **caractérisé en ce que** les différentes couches présentent à chaque fois une épaisseur de couche comprise entre 1 nanomètre et 10 manomètres.

3. Brasage multicouche selon l'une ou l'autre des revendications précédentes, **caractérisé en ce que** le brasage multicouche présente une épaisseur de couche totale comprise entre 1 micromètre et 100 micromètres.

4. Brasage multicouche selon l'une quelconque des revendications précédentes, **caractérisé en ce que** le brasage multicouche présente une épaisseur de couche totale comprise entre 3 micromètres et 50 micromètres.

5. Brasage multicouche selon l'une quelconque des revendication précédentes, **caractérisé en ce que** le brasage multicouche présente une épaisseur de couche totale comprise entre 5 micromètres et 20 micromètres.

6. Brasage multicouche selon l'une quelconque des revendications précédentes, **caractérisé en ce que** le brasage multicouche présente au moins 100 couches, en particulier 1000 couches.

7. Brasage multicouche selon l'une quelconque des revendication précédentes, **caractérisé en ce que** le brasage multicouche est constitué de façon binaire.

8. Brasage multicouche selon l'une quelconque des revendications précédentes, **caractérisé en ce que** le brasage multicouche contient des couches principales de nickel et / ou de fer.

9. Brasage multicouche selon la revendication 8, **caractérisé en ce que** le brasage multicouche contient des couches secondaires de chrome.

10. Brasage multicouche selon la revendication 8 ou 9, **caractérisé en ce que** les couches principales présentent des épaisseurs comprises entre 1 manomètre et 20 manomètres.

11. Brasage multicouche selon l'une quelconque des revendications 8 à 10, **caractérisé en ce que** les couches secondaires présentant des épaisseurs comprises entre 1 nanomètre et 5 manomètres.

12. Brasage multicouche selon l'une quelconque des revendications précédentes, **caractérisé en ce qu'**au moins une couche formant barrière est prévue entre les différentes couches.

13. Procédé de fabrication d'un composant, en particulier d'un composant d'une pile à combustible à haute température, **caractérisé en ce qu'**un brasage multicouche selon l'une quelconque des revendications précédentes est appliqué sur un produit semi-fini ou sur le composant et brasé dans un four à braser.

14. Echangeur de chaleur en couches comprenant un brasage multicouche selon l'une quelconque des revendications 1 à 12 et qui est fabriqué en particulier conformément au procédé selon la revendication 13.
